# EUROPÄISCHE PATENTSCHRIFT

(11) **EP 0 814 286 B1**
(45) Veröffentlichungstag und Bekanntmachung des Hinweises auf die Patenterteilung: **17.11.2004**
(21) Anmeldenummer: 97109094.9
(22) Anmeldetag: 05.06.1997
(51) Int. Cl.: F16H 61/16

(54) **Verfahren zur Steuerung des Gangwechsels eines Kraftfahrzeug-Automatikgetriebes**
Gear shift control method for an automatic transmission
Méthode de commande de changement de vitesse d'une transmission automatique de véhicule automobile

(30) Priorität: 17.06.1996 DE 19624061
(43) Veröffentlichungstag der Anmeldung: 29.12.1997
(73) Patentinhaber: ADAM OPEL AG, 65423 Rüsselsheim (DE)
(72) Erfinder: Becker, Gernot, Dipl.-Ing. (FH), 55278 Dexheim (DE); Kleila, Hans, Dipl.-Ing. (FH), 65428 Rüsselsheim (DE)

(56) Entgegenhaltungen:
- WO-A-89/01421
- US-A- 4 414 863
- US-A- 5 265 499
- US-A- 5 462 500
- US-A- 5 517 410

## Beschreibung

Die Erfindung betrifft ein Verfahren zur Steuerung des Gangwechsels eines Kraftfahrzeug-Automatikgetriebes mit elektronischem Getriebesteuergerät nach dem Oberbegriff des Patentanspruches 1.

Ein Verfahren der genannten Art, welches mit einer Antriebsschlupfregelung zusammenarbeitet, ist in DE 39 27 349 beschrieben. Nach diesem Verfahren wird ein Zurückschalten innerhalb einer vorgegebenen Zeitlänge, beginnend vom Einsetzen der Maschinenleistungssteuerung durch die Antriebsschlupfregelung oder vom ersten Hochschaltvorgang nach Beginn der Leistungssteuerung an, verhindert.

Damit kann zwar während des Regeleingriffs des Antischlupfregelsystems ein unerwünschtes Zurückschalten und damit das Auslösen von Pendelschaltungen vermieden werden. Im normalen Fahrbetrieb, bei dem das Antischlupfregelsystem nicht eingreift, wird jedoch ein nach diesem bekannten Verfahren gesteuertes Automatikgetriebe bei bestimmten Fahrzuständen, z. B. bei Bergfahrt, trotzdem zu Pendelschaltungen mit den nachteiligen Auswirkungen neigen.

Mit WO 89/01421 ist eine Steuereinrichtung zum selbsttätigen Schalten von Stufenwechselgetrieben beschrieben, bei dem zum Zweck des Unterdrückens von Pendelschaltungen vor Auslösen einer Schaltung eine Sperrzeit abgewartet wird, wenn seit der letzten Schaltung ein Gaspedalwechsel erfolgt ist.

Damit werden zwar die unerwünschten Pendelschaltungen vermieden, jedoch wird das Schaltverhalten des Getriebes insgesamt träger. Dies kann für ein Nutzfahrzeug zwar in Kauf genommen werden, ist aber für einen dynamisch zu fahrenden Personenkraftwagen nicht zu tolerieren.

Es ist Aufgabe der Erfindung, ein Verfahren der eingangs genannten Art zu schaffen, mit dem Pendelschaltungen bei jedem Fahrzustand auf einfache Weise vermieden werden, ohne dass die Fahrdynamik dadurch beeinträchtigt ist. Erfindungsgemäß wird diese Aufgabe durch die kennzeichnenden Merkmale des Patentanspruches 1 gelöst.

Bei einer nach diesem Verfahren arbeitenden Steuerung des Gangwechsels werden sowohl Hochschaltungen als auch Rückschaltungen trotz Initiierung des Schaltbefehls an den vorgegebenen Schaltkennlinien nur dann ausgeführt, wenn der aktuelle Betriebspunkt außerhalb des im Patentanspruch 1 definierten Bereiches A liegt. Dadurch wird bei einem nur geringfügigen Überschreiten der Schaltkennlinie kurz nach einer zuvor ausgeführten Schaltung keine Schaltung ausgeführt. Pendelschaltungen treten so nicht auf.

Die den Bereich A begrenzende Kennlinie wird bestimmt von einer die Schaltausführung verzögernden Zeitspanne Δt, die in Abhängigkeit von der Fahrerwunschinformation, z. B. der Drosselklappenstellung, variabel ist und mit zunehmender Drosselklappenöffnung kleiner wird, um bei einer definierten Drosselklappenöffnung auf den Wert Null zu sinken. Damit ist gesichert, daß trotz Unterdrückung von Pendelschaltungen jede initiierte Schaltung durch Druck auf das Gaspedal sofort und im übrigen nach geringer Zeitverzögerung ausgelöst wird.

Zweckmäßigerweise ist für jeden denkbaren Schaltvorgang jeweils eine spezifische Kennlinie vorgesehen und gespeichert, so daß für ein Vierganggetriebe drei Kennlinien für Hochschaltungen und drei für Rückschaltungen existieren, und zwar je eine Kennlinie für Schaltungen in benachbarte Gänge (z. B. 3-2 oder 2-3), je eine für Schaltungen in den übernächsten Gang (z. B. 3-1 oder 1-3) sowie je eine für Schaltungen über zwei Gänge hinweg (z. B. 1-4 bzw. 4-1).

Außerhalb des Bereiches A werden alle Schaltanforderungen entsprechend den Schaltkennlinien ausgeführt.

Zur Sicherstellung der Fahrbarkeit eines Kraftfahrzeuges mit einem so arbeitenden Automatikgetriebe ist es von Vorteil, wenn bei Vorliegen bestimmter Sonderparameter der Bereich A für die Schaltausführung unbeachtet bleibt. Solche Sonderparameter liegen z. B. vor bei
- anstehendem Kick-Down-Signal,
- Wechsel in den Schub,
- Erreichen der zulässigen oberen Motordrehzahl,
- automatischem Wechsel von einem Schaltprogramm zu einem anderen Schaltprogramm,
- manuellem Schalten.

Ein Ausführungsbeispiel der Erfindung ist nachstehend anhand von Diagrammen näher erläutert. Es zeigen
- Fig. 1:: eine den Bereich A begrenzende Kennlinie;
- Fig. 2:: ein Flußdiagramm.

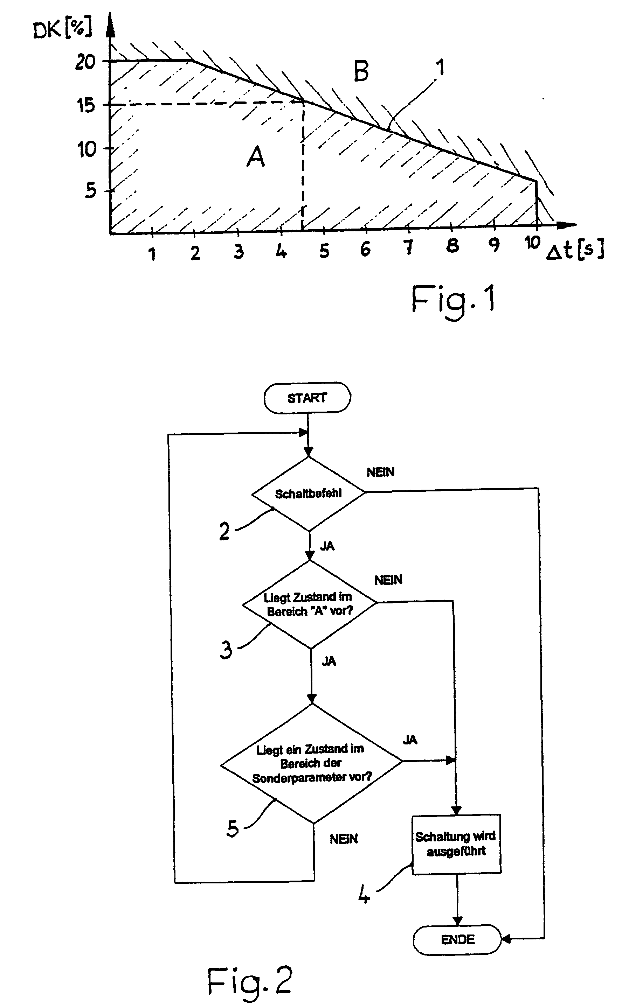

In dem Diagramm nach Figur 1 ist auf der Abszisse die Zeitspanne Δt zwischen dem aktuellen Zeitpunkt und dem Zeitpunkt eines vorangegangenen Schaltvorganges in Sekunden aufgetragen. Die Ordinate zeigt die Drosselklappenöffnung als Fahrerwunschinformation in Prozent.

Die Kennlinie 1 grenzt einen Bereich A von einem Bereich B ab. Im Bereich B werden alle Schaltanforderungen entsprechend den Schaltkennlinien ausgeführt.

Aus Figur 1 ist ersichtlich, daß bei einer Drosselklappenöffnung DK gleich oder größer 20% alle Schaltvorgänge entsprechend den üblichen Schaltkennlinien ausgeführt werden, d. h. bei einer Gangwechselanforderung entsprechend der jeweiligen Schaltkennlinie wird die Schaltung unverzüglich ausgeführt. Liegt jedoch eine Drosselklappenöffnung DK kleiner als 20%, z. B. von 15% vor (gestrichelte Linie) und ein Schaltbefehl wird gemäß den Schaltkennlinien initiiert, dann wird dieser Schaltbefehl bei gleichbleibender Drosselklappenöffnung von 15% erst ausgeführt, wenn 4,5 Sekunden seit einem vorausgegangenen Schaltvorgang verstrichen sind (siehe gestrichelte Linie in Figur 1). Diese Zeitspanne Δt ist größer, wenn die Drosselklappenöffnung DK kleiner ist, jedoch übersteigt sie nach dem vorliegenden Beispiel nicht 10 Sekunden. Bei Pendeln der Fahrerwunschinformation um den Schaltpunkt einer Schaltkennlinie, z. B. bei Spielen mit dem Fahrpedal, werden so keine Pendelschaltungen ausgelöst. Bei Vergrößern der Drosselklappenöffnung DK über den Wert der Kennlinie 1 hinaus wird ein dann noch anliegender Schaltbefehl sofort realisiert.

Das Flußdiagramm nach Figur 2 zeigt das Prinzip des Steuerungsverfahrens unter Einbeziehung von Sonderparametern, die ein unverzügliches Schalten erfordern. Erkennt das Steuersystem bei Schritt 2, daß ein Schaltbefehl - initiiert von den Schaltkennlinien - vorliegt, dann wird bei Schritt 3 vorab geprüft, ob ein aktueller Zustand im Bereich A vorliegt. Ist dies nicht der Fall, dann wird der Schaltvorgang gemäß Schritt 4 sofort ausgeführt. Wird bei Schritt 3 erkannt, daß der aktuelle Zustand der Steuerung im Bereich A liegt, dann wird nach Schritt 5 geprüft, ob ein Sonderparameter gegeben ist, z. B. ob es sich um einen manuell vorgegebenen Schaltbefehl handelt. Liegt ein solcher Sonderparameter vor, dann wird der Schaltvorgang gemäß Schritt 4 ebenfalls sofort ausgeführt. Liegt ein solcher Sonderparameter nicht vor, dann wird die Schaltung nicht ausgeführt und es wird erneut geprüft, ob die Schaltanforderung nach Schritt 2 noch gegeben ist. Liegt weiterhin eine Schaltanforderung an, wiederholt sich der Ablauf.

Pendelschaltungen werden dadurch mit relativ geringem Aufwand vermieden, ohne daß die Fahrbarkeit eines Fahrzeuges mit einem derart ausgerüsteten Automatikgetriebe beeinträchtigt ist.

## Patentansprüche

1. Verfahren zur Steuerung des Gangwechsels eines Kraftfahrzeug-Automatikgetriebes mit elektronischem Getriebesteuergerät, das in Abhängigkeit von Drosselklappenöffnungswinkel und Fahrzeuggeschwindigkeit sowie vermittels abgespeicherter Hochschaltkennlinien und Rückschaltkennlinien die Schaltvorgänge steuert, wobei durch Überschreiten einer der abgespeicherten Hochschaltkennlinien bzw. der Rückschaltkennlinien durch den aktuellen Betriebspunkt ein Hochschaltbefehl bzw. ein Rückschaltbefehl initiiert wird, **dadurch gekennzeichnet, daß** die Ausführung des Schaltbefehls solange unterdrückt wird, wie sich der aktuelle Betriebspunkt in einem Bereich A befindet, der bestimmt ist vom Ablauf einer definierten Zeitspanne Δt zwischen einer dem initiierten Schaltbefehl vorangegangenen Schaltung und dem aktuellen initiierten Schaltbefehl, wobei die Länge der definierten Zeitspanne Δt abhängig ist von der Drosselklappenöffnung DK.

2. Verfahren nach Anspruch 1, **dadurch gekennzeichnet, daß** die den Bereich A begrenzende und in Abhängigkeit von der Zeitspanne Δt und der Drosselklappenöffnung DK verlaufende Kennlinie (1) bei größerer Drosselklappenöffnung DK eine kleine Zeitspanne Δt und bei kleinerer Drosselklappenöffnung DK eine größere Zeitspanne Δt vorgibt.

3. Verfahren nach Anspruch 1 und 2, **dadurch gekennzeichnet, daß** bei Vorliegen von Sonderparametern, die einen sofortigen Schaltvorgang erfordern, die den Bereich A begrenzende Kennlinie (1) für den Schaltvorgang unbeachtet bleibt.

## Claims

1. Method for controlling the gear changing of a motor vehicle automatic transmission with electronic transmission control device which controls the gear-shifting operations as a function of throttle valve opening angle and vehicle speed as well as by means of stored change-up characteristics and change-down characteristics, wherein, due to the current operating point exceeding one of the change-up characteristics or change-down characteristics, a change-up command or a change-down command is initiated, **characterised in that** execution of the change command is suppressed as long as the current operating point is within a range A which is determined by the lapse of a predefined length of time Δt between a shift preceding the initiated change command and the current initiated change command, wherein the length of the predefined length of time Δt depends on the throttle valve opening DK.

2. Method according to claim 1, **characterised in that** the characteristic (1) defining the range A and running as a function of the length of time Δt and the throttle valve opening DK presets a short length of time Δt with a greater throttle valve opening DK and a longer length of time Δt with a smaller throttle valve opening DK.

3. Method according to claims 1 and 2, **characterised in that**, where there are special parameters which require an immediate gear-shifting operation, the characteristic (1) defining the range A for the gear-shifting operation is left out of consideration.

## Revendications

1. Procédé de commande de la commutation (du passage) des rapports d'une transmission automatique de véhicule comprenant un organe électronique de commande de transmission qui commande la commutation des rapports de transmission en fonction de l'angle d'ouverture du papillon des gaz et de la vitesse du véhicule, ainsi qu'au moyen de caractéristiques mises en mémoire de montée et de descente (rétrogradage) des rapports de transmission, dans lequel procédé, en cas de dépassement de l'une des caractéristiques mises en mémoire de montée ou de descente des rapports de transmission par le point de fonctionnement actuel, un ordre de montée ou de descente des rapports de transmission est déclenché, **caractérisé en ce que** la réalisation de l'ordre de commutation des rapports de transmission est interrompu aussi longtemps que le point de fonctionnement actuel se trouve dans une zone A, qui est déterminée par l'écoulement d'un intervalle de temps Δt défini entre une commutation de rapports de transmission réalisée avant l'ordre de commutation des rapports de transmission déclenché et l'ordre actuel déclenché de commutation de rapports de transmission, la longueur de l'intervalle de temps Δt étant fonction de l'ouverture DK du papillon des gaz.

2. Procédé selon la revendication 1, **caractérisé en ce que** la ligne caractéristique (1) délimitant la zone A et tracée en fonction de l'intervalle de temps Δt et de l'ouverture DK du papillon des gaz, indique pour les ouvertures DK de papillon des gaz importantes un intervalle de temps Δt réduit et pour les ouvertures DK de papillon des gaz plus réduites un intervalle de temps Δt plus important.

3. Procédé selon la revendication 1 et 2, **caractérisé en ce que**, en cas d'apparition de paramètres particuliers qui réclament un processus immédiat de commutation du rapport de transmission, la ligne caractéristique (1) délimitant la zone A n'est pas prise en considération.
